# EUROPEAN PATENT APPLICATION

(11) **EP 4 748 619 A1**
(43) Date of publication of application: **27.05.2026**
(21) Application number: 24223808.7
(22) Date of filing: 30.12.2024
(51) Int. Cl.: B60L 3/00, H02J 7/00

(54) **DRIVE AND DETECTION METHOD THEREOF**

(30) Priority: 21.11.2024 TW 113144852
(71) Applicant: Delta Electronics, Inc., Taoyuan City 333 (TW)
(72) Inventor: Lu, Yi-Hsuan, Taoyuan City 333 (TW); Liao, Yuan-Kai, Taoyuan City 333 (TW); Hsieh, Wen-Cheng, Taoyuan City 333 (TW); Huang, Chien-Ping, Taoyuan City 333 (TW)
(74) Representative: Uexküll & Stolberg

(57) **Abstract**

A detection method for a drive (1) is provided. Firstly, a step (S1) is performed to determine whether an operating parameter of the drive (1) is normal. If the determining condition of the step (S1) is satisfied, a step (S2) is performed to determine whether a value of the abnormal flag is 1. If the determining condition of the step (S2) is satisfied, the soft-start circuit is disabled. If the determining condition of the step (S1) or the step (S2) is not satisfied, the soft-start circuit (3) is enabled to turn on the switch (8) and then the capacitor (C) is pre-charged in a predetermined period. If a pre-charged voltage of the capacitor (C) is greater than a voltage threshold, the drive (1) enters a standby mode. If the pre-charged voltage of the capacitor (C) is not greater than the voltage threshold, the switch (8) is turned off.

## Description

### FIELD OF THE INVENTION

The present invention relates to the field of a detection technology, and more particularly to a drive and a detection method for the drive.

### BACKGROUND OF THE INVENTION

As the application and development of electric vehicles become more and more popular, safety protection is very important in the applications of batteries, electric vehicles and motors. It is necessary to ensure that the circuit components meet the customer's requirements under various operating conditions. Generally, the wires or terminal blocks of the power cable in the electric vehicle are marked with texts. In addition, the wires with different colors or the terminals with different sizes are employed to avoid incorrect connection of the power cable.

In an electric vehicle, a drive is required to drive the electronic components of the electric vehicle. Furthermore, when an electric vehicle is in operation, the current will charge the capacitor inside the electric vehicle, and a large inrush current will be generated in the beginning of the charging process. Due to this large inrush current, the PCB traces have insufficient current resistance. Consequently, the parallel-connected or series-connected electronic components in the trace are damaged, or even other parallel-connected or series-connected electronic components in the trace are possibly damaged. For solving these problems, the drive of the general electric vehicle is additionally equipped with a soft-start circuit to extend the circuit initialization time. Due to the arrangement of the soft-start circuit, the capacity is charged at a slower rate, and the adverse effect is reduced.

However, if the power cable of the electric vehicle is reversely connected during assembly because of mistake, the resistor in the soft-start circuit will burn out. Under this circumstance, the drive has the malfunction, and the electric vehicle is unable to operate normally.

Therefore, it is important to provide an improved drive and a detection method for the drive in order to address the problems of the conventional technologies.

### SUMMARY OF THE INVENTION

The present invention provides a drive and a detection method for the drive. Even if the power cable of the electric vehicle is reversely connected, the problem of burning out the resistor in the soft-start circuit will be solved. Consequently, the possibility of causing the damage of the drive will be minimized, and the electric vehicle can be operated normally.

In accordance with an aspect of the present invention, a detection method is used for a detection circuit in a drive. The drive further includes a soft-start circuit. The soft-start circuit is electrically connected with a power source. The detection circuit executes the detection method when the soft-start circuit receives an electric power from the power source. The detection method includes the following steps. Firstly, a step (S1) is performed to determine whether at least one operating parameter of the drive is normal. When a determining condition of the step (S1) is satisfied, a step (S2) is performed. When the determining condition of the step (S1) is not satisfied, a step (S4) is performed. The step (S2) is performed to determine whether a value of the abnormal flag in the detection circuit is 1. When a determining condition of the step (S2) is satisfied, a step (S3) is performed. When the determining condition of the step (S2) is not satisfied, the step (S4) is performed. In the step (S3), the soft-start circuit is disabled, and the detection method is ended. In the step (S4), the soft-start circuit is enabled to turn on the switch. After the step (S4), a step (S5) is performed to precharge the capacitor in the predetermined period. Then, a step (S6) is performed to determine whether a voltage of the capacitor is greater than a preset voltage threshold. When a determining condition of the step (S6) is satisfied, a step (S7) is performed. When the determining condition of the step (S6) is not satisfied, a step (S8) is performed. In the step (S7), the drive is controlled to enter a standby mode, and the detection method is ended. In the step (S8), the switch is turned off, the value of the abnormal flag is set to 1, and the detection method is ended.

In accordance with another aspect of the present invention, a drive is provided. The drive includes a detection circuit, a soft-start circuit, a positive input terminal, a negative input terminal and a detection terminal. The detection circuit is configured to determining whether at least one operating parameter of the drive is normal. The soft-start circuit is electrically connected with a positive power terminal and a negative power terminal of the power source and configured to prevent from generation of an overcurrent when the drive is started. The soft-start circuit includes a resistor, a switch and a capacitor. A first terminal of the resistor is electrically connected to the positive input terminal. A first terminal of the switch is electrically connected to a second terminal of the resistor. A second terminal of the switch is electrically connected to the detection terminal. A first terminal of the capacitor is electrically connected to the detection terminal and the second terminal of the switch. A second terminal of the capacitor is electrically connected to the negative input terminal. When the positive input terminal of the drive receives an electric power from the positive power terminal of the power source, the detection circuit executes a detection method to detect whether the drive is forwardly connected with the power source or reversely connected with the power source.

The above contents of the present invention will become more readily apparent to those ordinarily skilled in the art after reviewing the following detailed description and accompanying drawings, in which:

### BRIEF DESCRIPTION OF THE DRAWINGS

FIG. 1 is a flowchart of a detection method for a drive according to an embodiment of the present invention;
FIG. 2 is a schematic circuit diagram illustrating the circuitry topology of the drive for the detection method when the drive is forwardly connected to a power source; and
FIG. 3 is a schematic circuit diagram illustrating the circuitry topology of the drive for the detection method when the drive is reversely connected to the power source.

### DETAILED DESCRIPTION OF THE PREFERRED EMBODIMENT

The present invention will now be described more specifically with reference to the following embodiments. It is to be noted that the following descriptions of preferred embodiments of this invention are presented herein for purpose of illustration and description only. It is not intended to be exhaustive or to be limited to the precise form disclosed.

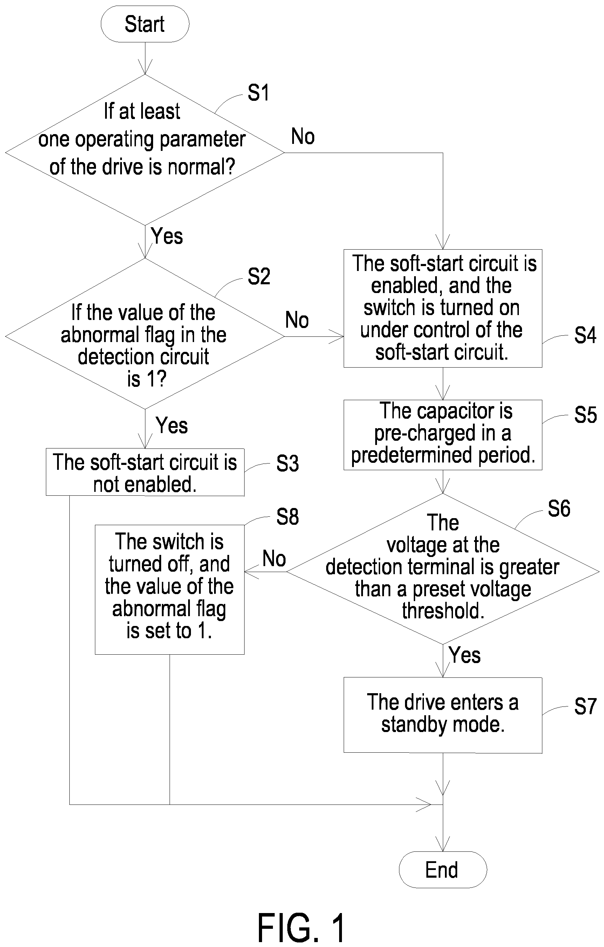

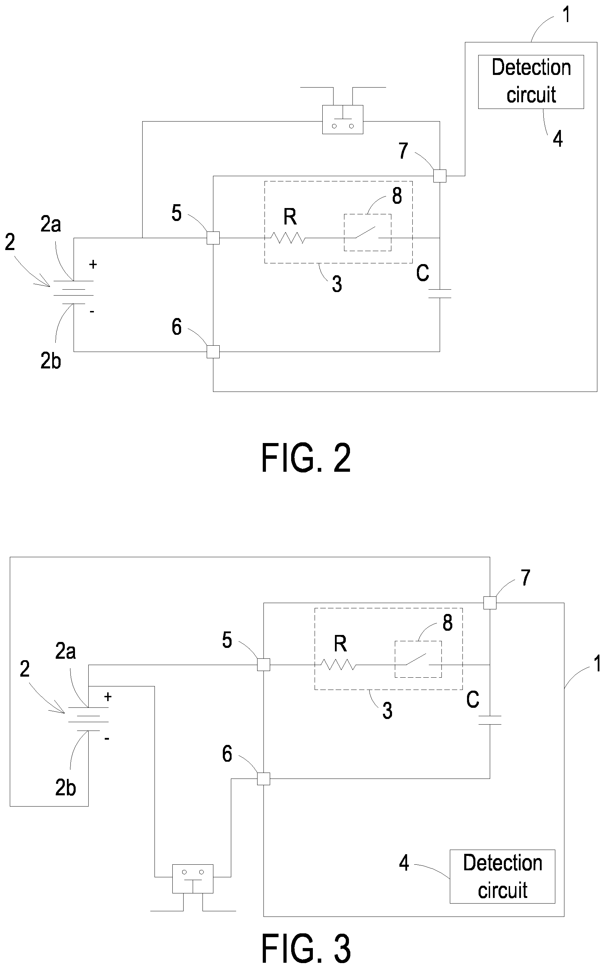

FIG. 1 is a flowchart of a detection method for a drive according to an embodiment of the present invention. FIG. 2 is a schematic circuit diagram illustrating the circuitry topology of the drive for the detection method when the drive is forwardly connected to a power source. FIG. 3 is a schematic circuit diagram illustrating the circuitry topology of the drive for the detection method when the drive is reversely connected to the power source.

The drive 1 can be installed in an electronic device (not shown). For example, the electronic device is an electric vehicle. The drive is used to drive the operations of the electronic components or circuits in the electronic device. The drive 1 receives the electric power provided by a power source 2. That is, after the power source 2 is powered on, the drive 1 is enabled. The power source 2 includes a positive power terminal 2a and a negative power terminal 2b.

In an embodiment, the drive 1 includes a soft-start circuit 3 and a detection circuit 4. The soft-start circuit 3 is used to prevent from the generation of the overcurrent when the drive 1 is started. In addition, the soft-start circuit 3 is electrically connected with the positive power terminal 2a and the negative power terminal 2b of the power source 2. The drive 1 further includes a positive input terminal 5, a negative input terminal 6, and a detection terminal 7. The soft-start circuit 3 includes a resistor R, a switch 8 and a capacitor C.

The first terminal of the resistor R is electrically connected to the positive input terminal 5. The first terminal of the switch 8 is electrically connected to the second terminal of the resistor R. The second terminal of the switch 8 is electrically connected to the detection terminal 7. Preferably but not exclusively, the switch 8 is a metal oxide semiconductor field effect transistor (MOSFET). The first terminal of the capacitor C is electrically connected to the detection terminal 7 and the second terminal of the switch 8. The second terminal of the capacitor C is electrically connected to the negative input terminal 6.

When the positive input terminal 5 of the drive 1 is electrically connected to the positive power terminal 2a of the power source 2 and the negative input terminal 6 of the drive 1 is electrically connected to the negative power terminal 2b of the power source 2, the drive 1 is forwardly connected with the power source 2. Under this circumstance, the soft-start circuit 3 receives the electric power from the power source 2 through the positive input terminal 5. Consequently, when the switch 8 is turned on, the electric power provided by the power source 2 is transmitted from the positive power terminal 2a of the power source 2 and returned to the negative power terminal 2b of the power source 2 through the transmission path of the resistor R, the on-state switch 8, the capacitor C and the negative input terminal 6. Furthermore, when the switch 8 is turned on, the capacitor C is charged. Consequently, after a certain power-on period, the voltage at the detection terminal 7 rises. The voltage at the detection terminal 7 is proportional to the voltage across the two terminals of the capacitor C.

When the positive input terminal 5 of the drive 1 is electrically connected to the positive power terminal 2a of the power source 2 and the detection terminal 7 of the drive 1 is electrically connected to the negative power terminal 2b of the power source 2, the drive 1 is reversely connected with the power source 2. Under this circumstance, the soft-start circuit 3 receives the electric power from the power source 2 through the positive input terminal 5. Consequently, when the switch 8 is turned on, the electric power provided by the power source 2 is transmitted from the positive power terminal 2a of the power source 2 to the negative power terminal 2b of the power source 2 through the transmission path of the resistor R, the on-state switch 8 and the detection terminal 7. Under this circumstance, the capacitor C is not charged by the electric power from the power source 2. After the certain power-on period, the voltage at the detection terminal 7 does not rise. That is, the voltage at the detection terminal 7 is lower than a preset voltage threshold (e.g., 10V).

During the operation of the drive 1, the detection circuit 4 checks whether at least one operating parameter inside the drive 1 is abnormal. For example, the at least one operating parameter includes a voltage, a current, or any other appropriate parameter. The detection circuit 4 further contains an abnormal flag. The abnormal flag is switched between two values 0 and 1. In the initiation stage of the drive 1, the abnormal flag is set to 0. Furthermore, the detection circuit 4 determines whether the soft-start circuit 3 is started and controls the operation of the switch 8. Furthermore, when the capacitor C is charged, the detection circuit 4 has a time-counting function for calculating the charging time. In some embodiments, the detection circuit 4 is implemented with a microcontroller unit (MCU).

When the soft-start circuit 3 receives the electric power from the power source 2 through the positive input terminal 5, the detection circuit 4 performs the detection method of FIG. 1. In an embodiment, the detection method includes the following steps.

In a step S1, the detection circuit 4 determines whether at least one operating parameter of the drive 1 is normal. The purpose of this step is to evaluate whether the hardware condition of the drive 1 is normal. For example, the at least one operating parameter includes a voltage, a current, or any other appropriate parameter.

If the determining condition of the step S1 is satisfied, a step S2 is performed to determine whether a value of the abnormal flag in the detection circuit 4 is 1. If the determining condition of the step S1 is not satisfied, a step S4 is performed. In the step S4, the soft-start circuit 3 is enabled, and the switch 8 is turned on under control of the soft-start circuit 3.

Furthermore, before the step S1, a preliminary step is performed to check whether the drive 1 is powered on normally. If the drive 1 is powered on normally, the step S1 will be performed. Whereas, if the drive 1 is not powered on normally, the flowchart is ended to protect the electronic device.

As mentioned above, if the determining result of the step S1 indicates that the at least one operating parameter of the drive 1 is normal, the step S2 is performed to determine whether the value of the abnormal flag in the detection circuit 4 is 1.

If the determining result of the step S2 indicates that the value of the abnormal flag is 1, a step S3 is performed. In the step S3, the soft-start circuit 3 is not enabled. Furthermore, the flowchart is ended to protect the electronic device.

If the determining result of the step S2 indicates that the value of the abnormal flag is not 1 (i.e., equal to 0), the step S4 is performed. In the step S4, the soft-start circuit 3 is enabled, and the switch 8 is turned on under control of the soft-start circuit 3.

After the step S4, a step S5 is performed. In the step S5, the detection circuit 4 counts time for a predetermined period, the capacitor C is charged in the predetermined period. For example, the predetermined period is 0.5 second. It is noted that the length of the predetermined period is not restricted. The length of the predetermined period may be set according to the resistance of the resistor 5. After the predetermined period, the capacitor C is pre-charged to a specified voltage.

After the step S5, a step S6 is performed to determine whether the voltage at the detection terminal 7 is greater than a preset voltage threshold. As mentioned above, the voltage at the detection terminal 7 is proportional to the voltage across the two terminals of the capacitor C. In other words, if the voltage at the detection terminal 7 is greater than the preset voltage threshold, it means that the capacitor C is charged normally after the predetermined pre-charging period. In an embodiment, the preset voltage threshold is determined according to the circuitry topology of the corresponding electronic device or the drive 1 and the length of the predetermined period.

If the determining result of the step S6 indicates that the voltage at the detection terminal 7 is greater than the preset voltage threshold, the drive 1 enters a standby mode under control of the detection circuit 4 (Step S7). In addition, the flowchart is ended to protect the electronic device. When the drive 1 enters the standby mode, the drive 1 receives an external command to drive the operations of the electronic components or circuits inside the electronic device.

If the determining result of the step S6 indicates that the voltage at the detection terminal 7 is lower than or equal to the preset voltage threshold, the switch 8 is turned off under control of the detection circuit 4 (Step S8). In addition, the value of the abnormal flag is set to 1, and the flowchart is ended. Furthermore, if the voltage at the detection terminal 7 is lower than or equal to the preset voltage threshold, it means that the capacitor C is not normally charged. Under this circumstance, it is determined that the drive 1 is reversely connected to the power source 2. Consequently, the flowchart is ended to protect the electronic device.

From the above descriptions, the present invention provides the drive and the detection method for the drive. Firstly, the soft-start circuit is enabled by the detection circuit, and the switch is turned on under control of the soft-start circuit. If the voltage at the detection terminal is lower than or equal to the preset voltage threshold after the capacitor in the soft-start circuit is pre-charged for a predetermined period, it means that the capacitor is not normally charged, and it is determined that the drive is reversely connected to the power source. Under control of the detection circuit, the switch in the soft-start circuit is turned off, and the value of the abnormal flag is set to 1. Even if the power cable of the electric vehicle is reversely connected, the problem of burning out the resistor in the soft-start circuit will be solved. Consequently, the possibility of causing the damage of the drive will be minimized, and the electric vehicle can be operated normally.

## Claims

1. A detection method for a detection circuit (4) in a drive (1), the drive (1) further comprising a soft-start circuit (3) electrically connected with a power source (2), the detection circuit (4) executing the detection method when the soft-start circuit (3) receives an electric power from the power source (2), the detection method being **characterized by** comprising steps of:
(S1) determining whether at least one operating parameter of the drive (1) is normal, wherein when a determining condition of the step (S1) is satisfied, a step (S2) is performed, wherein when the determining condition of the step (S1) is not satisfied, a step (S4) is performed;
(S2) determining whether a value of an abnormal flag in the detection circuit (4) is 1, wherein when a determining condition of the step (S2) is satisfied, a step (S3) is performed, wherein when the determining condition of the step (S2) is not satisfied, the step (S4) is performed;
(S3) disabling the soft-start circuit (3), and ending the detection method;
(S4) enabling the soft-start circuit (3), and turning on a switch (8);
(S5) pre-charging a capacitor (C) of the soft-start circuit (3) in a predetermined period;
(S6) determining whether a voltage of the capacitor (C) is greater than a preset voltage threshold, wherein when a determining condition of the step (S6) is satisfied, a step (S7) is performed, wherein when the determining condition of the step (S6) is not satisfied, a step (S8) is performed;
(S7) controlling the drive (1) to enter a standby mode, and then ending the detection method; and
(S8) turning off the switch (8), setting the value of the abnormal flag to 1, and then ending the detection method.

2. The detection method according to claim 1, wherein before the step (S1), further comprises a step of checking whether the drive (1) is powered on normally, wherein if the drive (1) is powered on normally, the step (S1) is performed, wherein if the drive (1) is not powered on normally, the detection method is ended.

3. The detection method according to claim 1, wherein the preset voltage threshold is determined according to the predetermined period, and the predetermined period is determined according to a resistance of a resistor (R) of the drive (1).

4. The detection method according to claim 1, wherein the preset voltage threshold is 10V.

5. The detection method according to claim 1, wherein in an initiation stage of the drive (1), the abnormal flag is set to 0.

6. The detection method according to claim 1, wherein the at least one operating parameter includes a voltage or a current.

7. The detection method according to claim 1, wherein after the drive (1) enters the standby mode in the step (S7), the drive (1) receives an external command to drive operations of an electronic component or a circuit.

8. The detection method according to claim 1, wherein the predetermined period is 0.5 second.

9. A drive (1), **characterized by** comprising:
a detection circuit (4) configured to determine whether at least one operating parameter of the drive (1) is normal;
a soft-start circuit (3) electrically connected with a positive power terminal (2a) and a negative power terminal (2b) of a power source (2), and comprising a resistor (R), a switch (8) and a capacitor (C), wherein the soft-start circuit (3) is configured to prevent from generation of an overcurrent when the drive (1) is started;
a positive input terminal (5);
a negative input terminal (6); and
a detection terminal (7),
wherein a first terminal of the resistor (R) is electrically connected to the positive input terminal (5), a first terminal of the switch (8) is electrically connected to a second terminal of the resistor (R), a second terminal of the switch (8) is electrically connected to the detection terminal (7), a first terminal of the capacitor (C) is electrically connected to the detection terminal (7) and the second terminal of the switch (8), and a second terminal of the capacitor (C) is electrically connected to the negative input terminal (6),
wherein when the positive input terminal (5) of the drive (1) receives an electric power from the positive power terminal (2a) of the power source (2), the detection circuit (4) executes a detection method to detect whether the drive (1) is forwardly connected with the power source (2) or reversely connected with the power source (2).

10. The drive (1) according to claim 9, wherein when the positive input terminal (5) is electrically connected to the positive power terminal (2a) of the power source (2) and the negative input terminal (6) is electrically connected to the negative power terminal (2b) of the power source (2), the detection circuit (4) determines that the drive (1) is forwardly connected with the power source (2), and
wherein when the positive input terminal (5) is electrically connected to the positive power terminal (2a) of the power source (2) and the detection terminal (7) is electrically connected to the negative power terminal (2b) of the power source (2), the detection circuit (4) determines that the drive (1) is reversely connected with the power source (2).

## Amended claims

### Amended claims in accordance with Rule 137(2) EPC.

1. A detection method for a detection circuit (4) in a drive (1), the drive (1) further comprising a soft-start circuit (3) electrically connected with a power source (2), the detection circuit (4) executing the detection method when the soft-start circuit (3) receives an electric power from the power source (2), the detection method comprising steps of:
(S1) determining whether at least one operating parameter of the drive (1) is normal to evaluate whether a hardware condition of the detection circuit (4) is normal, wherein when a determining condition of the step (S1) is satisfied, a step (S2) is performed, wherein when the determining condition of the step (S1) is not satisfied, a step (S3) is performed;
(S2) determining whether a value of an abnormal flag in the detection circuit (4) is 1, wherein when a determining condition of the step (S2) is satisfied, a step (S3) is performed, wherein when the determining condition of the step (S2) is not satisfied, the step (S4) is performed;
(S3) disabling the soft-start circuit (3), and ending the detection method; (S4) enabling the soft-start circuit (3), and turning on a switch (8);
(S5) pre-charging a capacitor (C) of the soft-start circuit (3) in a predetermined period;
(S6) determining whether a voltage of the capacitor (C) is greater than a preset voltage threshold, wherein when a determining condition of the step (S6) is satisfied, a step (S7) is performed, wherein when the determining condition of the step (S6) is not satisfied, a step (S8) is performed;
(S7) determining the drive (1) is forwardly connected with the power source (2), controlling the drive (1) to enter a standby mode, and then ending the detection method; and
(S8) determining the drive (1) is reversely connected with the power source (2), turning off the switch (8), setting the value of the abnormal flag to 1, and then ending the detection method.

2. The detection method according to claim 1, wherein before the step (S1), further comprises a step of checking whether the drive (1) receives power, wherein if the drive (1) receives power, the step (S1) is performed, wherein if the drive (1) does not receive power, the detection method is ended.

3. The detection method according to claim 1, wherein the preset voltage threshold is determined according to the predetermined period, and the predetermined period is determined according to a resistance of a resistor (R) of the drive (1).

4. The detection method according to claim 1, wherein the preset voltage threshold is 10V.

5. The detection method according to claim 1, wherein in an initiation stage of the drive (1), the abnormal flag is set to 0.

6. The detection method according to claim 1, wherein the at least one operating parameter includes a voltage or a current.

7. The detection method according to claim 1, wherein after the drive (1) enters the standby mode in the step (S7), the drive (1) receives an external command to drive operations of an electronic component or a circuit.

8. The detection method according to claim 1, wherein the predetermined period is 0.5 second.
